Europäisches Patentamt

European Patent Office

Office européen des brevets

(19)

(11) Publication number: **0 269 301**
**B1**

(12) # EUROPEAN PATENT SPECIFICATION

(45) Date of publication of the patent specification:
29.08.90

(51) Int. Cl.⁵: **B60C 11/00**

(21) Application number: **87309893.3**

(22) Date of filing: **09.11.87**

(54) **Radial tyre.**

(30) Priority: **10.11.86 JP 268308/86**

(43) Date of publication of application:
**01.06.88 Bulletin 88/22**

(45) Publication of the grant of the patent:
**29.08.90 Bulletin 90/35**

(84) Designated Contracting States:
**DE FR GB**

(56) References cited:
**EP-A- 0 016 229**
**DE-A- 3 411 667**
**FR-A- 2 242 256**

**PATENT ABSTRACTS OF JAPAN, vol. 9,
no. 107 (M-378)[1830], 11th May 1985; &
JP-A-59 230 804 (YAMAHA HATSUDOKI K.K.) 25-12-1984**

(73) Proprietor: **SUMITOMO RUBBER INDUSTRIES, CO. LTD,
No. 1-1, Tsutsui-cho 1-chome, Chuo-ku Kobe-shi
Hyogo-ken 651(JP)**

(72) Inventor: **Nakaseko, Kozaburo, 10-22, 1-chome
Tsukimiyama, Takarazuka-shi Hyogo(JP)**

(74) Representative: **Stewart, Charles Geoffrey, SP TYRES
UK LIMITED Tyre Technical Division, Fort Dunlop
Erdington Birmingham B24 9QT(GB)**

ACTORUM AG

## Description

The present invention relates to a passenger car radial tyre.

A tyre having a radial structure is composed of carcass cords arranged in the radial direction of the tyre, and a tread portion provided with a belt layer in which cords cross each other in the circumferential direction of the tyre at a comparatively blunt angle. Recently tyres having a width larger than their height, namely low aspect ratio tyres have been used in order to enhance the transverse rigidity and reduce the rolling resistance.

Since such a low aspect radial tyre has a wide tread surface, the configuration of the tread surface exerts an influence not only on the running stability, wear characteristics and vibration characteristics of the tyre and the riding comfort of the car, but also on the noise characteristics. An object of the invention is to reduce the noise of such tyres.

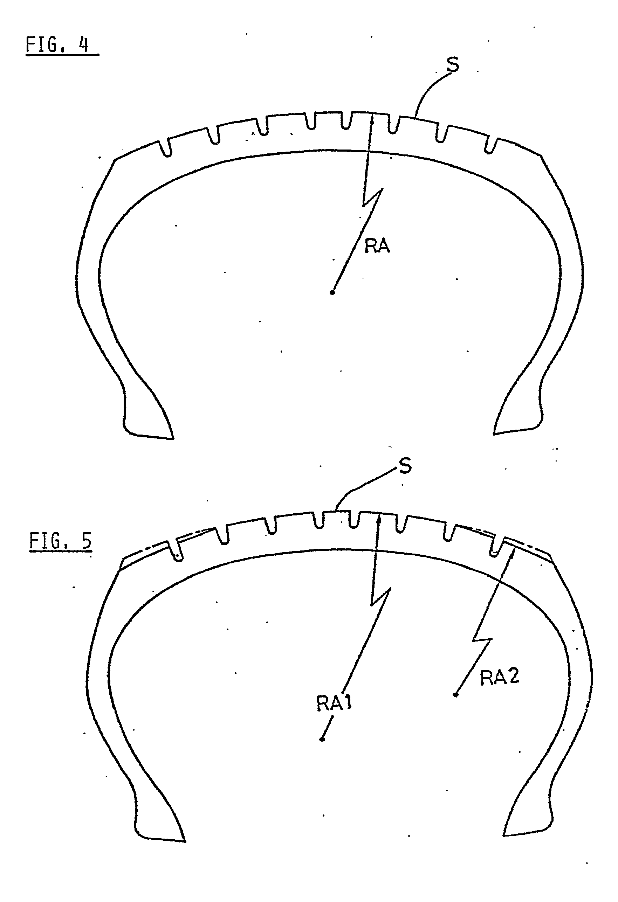

Various studies have been made on the configuration of the tread surface of a tyre. Tyres conventionally used have a tread surfaces as shown in Fig. 4, which consists of a single curvature of a comparatively large radius RA, or a tread surface S as shown in Fig. 5, which consists of a composite curvature, that is an arc of a large radius RA 1 in the central portion of the tread surface S, and an arc of a smaller radius RA2 at the shoulder portions on both sides.

In Fig.4, the radius RA of the tread surface S is about 150 to 1,200mm, and in Fig.5, the radius of the tread surface S is about 700 to 1,200mm, and the radius R2 is about 120 to 300m.

However, when a low aspect ratio tyre having a tread surface S consisting of a single curvature such as that shown in Fig.4, runs with a load mounted thereon, there is a tendency for the ground contact pressure of the tread surface S at the shoulder portions to be increased. As a result, the vibration force applied through the pattern in the shoulder portions is increased, thereby deteriorating the vibration insulating properties of the tyre and increasing the noise transferred from the road to the vehicle. The increase in the ground contact pressure at the shoulder portions also impairs the grip properties of the tread as a whole and damages the running stability of the tyre.

On the other hand, a tyre provided with a comparatively small radius RA2 in the shoulder portions of the tread surface S as shown in Fig.5 is capable of making the ground contact pressure distribution on the tread surface uniform to a certain extent because of the curving of the shoulder portions radially inwardly thereby reducing the ground contact pressure in the said shoulder portions. In Fig.5, the tyre consisting of a single curvature as shown in Fig.4 is indicated by the one-dot line for comparison.

However, passenger-car radial tyres have recently been required not only to have running stability, vibration characteristics and wear characteristics and to provide riding comfort, but also to reduce noise in the vehicle interior derived from the tyres during the travel of the car. In particular to reduce pattern noise derived from the tyre tread pattern and road noise derived from a rough road. A tire according to the preamble of claim 1 is known, e.g. from EP-A 0 016 229.

Conventional tyres having conventional tread surface configuration do not adequately meet such demands and so it is an object of the present invention to eliminate the above described problems in the prior art radial tyres.

Accordingly, the present invention provides a passenger car radial tyre having a tread surface comprising in cross section an inner arc portion which constitutes the central portion of said tread surface and which has a radius of curvature R1 and outer arc portions which are smoothly connected to said inner arc portion in such a manner as to constitute the shoulder portions of said tread surface and which have a radius of curvature R2, the radius of curvature R2 being larger than the radius of curvature R1, characterised in that

(a) the radius of curvature R1 is 1.4 to 2.5 times the sectional width W of said tyre when said tyre is mounted on a rim and inflated,

(b) the radius of curvature of R2 is 1.5 to 2.5 times the radius of curvature R1, and

(c) the said inner arc portion and said outer arc portions are connected to each other at junctions which are spaced from the equator surface of the tyre by a distance L which is 0.08 to 0.2 times the sectional width of the tyre.

The radius of curvature R2 is more preferably in the range of 1.5 to 2 times the radius of curvature R1.

Furthermore, the tyre is preferably a low aspect ratio tyre having an aspect ratio between the sectional height T and the sectional width W of the tyre of not more than 70% when measured with the tyre fitted to a rim and inflated.

Further aspects of the present invention will become clear from the following description by way of example only, of one preferred embodiment thereof, taken in conjunction with the accompanying diagrammatic drawings in which

Fig.1. is a cross sectional view of an embodiment of the present invention;

Fig.2. schematically shows the structure of the tread surface of the embodiment shown in Fig.1;

Fig.3. is a graph showing the comparison between the noise level for the embodiment shown in Fig.1 and the noise level for a conventional tyre; and

EP 0 269 301 B1

Fig.4. and 5 schematically show conventional tyres.

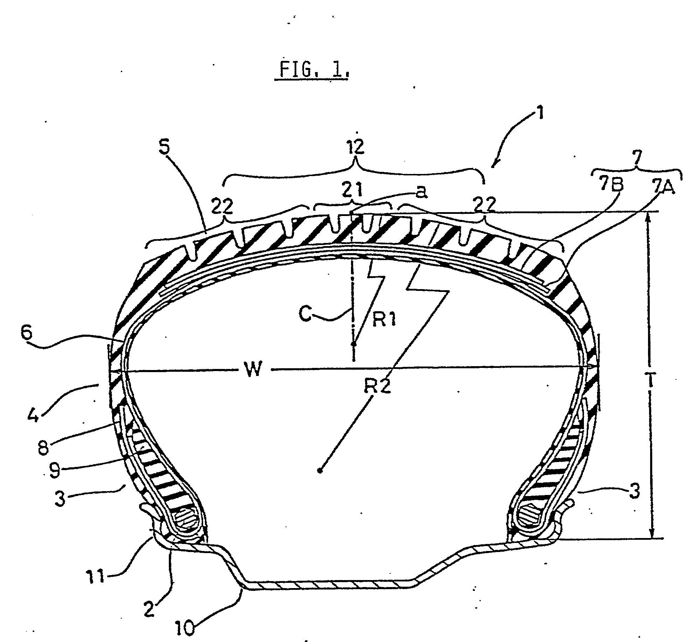

Referring first to Fig.1, a passenger car radial tyre 1 is provided on both sides with bead portions 3 each containing a bead core 2, sidewall portions 4 which extend radially outwardly from the bead portions 3 to a tread portion 5 which is connected to the upper ends of the side wall portions 4. A tyre carcass reinforcement 6 is provided which is turned up from the inside of each bead core 2 towards the outside. The tread portion 5 is provided with a belt layer 7 outside of the carcass 6. A bead apex 9 is provided between the main body portion of the carcass 6 and the turned-up portion. The tyre 1 is mounted on a rim 10 by inflating to press the bead portions 3 to the flanges 11 of a rim 10.

The carcass 6 is a radius carcass being an assembly of radially arranged cords arranged at an angle of about 80 to 90 degrees relative to the equator surface C of the tyre. Nylon, polyester, rayon or aromatic polyamide fibres may be used for the cords. The carcass 6 consists of 1 to 3 plies.

The belt layer 7 is a two-layer structure consisting of a first ply 7A provided adjacent to the carcass 6 and a second ply 7B provided above the first ply 7A. In both the first and second plies 7A and 7B, metal cords are used, laid inclined at a comparatively blunt angle relative to the equator surface C of the tyre. The cords in the first ply 7A are inclined in the opposite direction to those in the second ply 7B. The first ply 7a has a larger width than the ply 7B, and both ends of the first ply 7A extend below the edge regions where the sidewall portions 4 intersect the tread portion 5. The bead portion 3 is provided with a reinforcing layer 8 which extends upwardly from the lower edge of the bead core 2 along the turned-up portion of the carcass 6 and beyond the upper end of the bead apex 9. The reinforcing layer 8 is a single or a plurality of plies consisting of metal cords or other appropriate organic fibre cords.

The tyre 1 is a low aspect tyre in which the ratio T/W of the distance T from the lower end of the bead portion 3 to the maximum height a of a tread surface 12, which is the upper surface of the tread portion 5, and the width W of the tyre is less than T, for example, is not more than 70% which when the tyre 1 is charged with the normal inner pressure.

The tread surface 12 is composed of an inner arc portion 21 which constitutes the central portion of the tread surface 12 and which has a radius of curvature R1, and outer arc portions 22 which constitute the shoulder portions of the tread surface 12 and which have a radius of curvature of R2. The curvature R2 of the outer arc portions 22 is in the range of 1.5 to 2.5 times, more preferably about 1.5 to 2 times the radius R1 of the inner arc portion 21.

This structure makes the ground contact pressure at the centre portion of the tread surface larger than that at the shoulder portions and therefore enables the ground contact pressure at the shoulder portions to be reduced when the tyre is loaded and used on a vehicle.

As a result, it is possible to reduce the vibration forces applied to the shoulder portions, in particular, to and from the block pattern of the tyre. In addition, since the shoulder portions have a comparatively large radius R2, it is possible to reduce the vertical rigidity in the shoulder portions, namely, the rigidity in the radial direction of the tyre, thereby not only reducing the transference of vibration from the tread surface 12 to the rim 10 but also suppressing the generation of noise derived from the road especially while the car is travelling at low or middle speeds. If the curvature radius R2 is smaller than 1.5 times the curvature radius R2, there is little difference between this tyre and a conventional one provided with a tread surface consisting of a single curvature shown in Fig.4. so that the above described effect is lessened. On the other hand, if the curvature radius R2 is larger than 2.5 times the curvature radius R1, the contraction allowance in the radially inward direction of the shoulder portions becomes smaller than that of the central portion, so that the ground contacting pressure in the shoulder portions is increased. This causes rounding of the shoulder portions and/or local wear in the shoulder portions, and impairs the running stability.

In the tyre 1, the radius R1 of the inner arc portion 21 is set at about 1.4 to 2.5 times the width W of the tyre.

If the radius R1 is smaller than 1.4 times the width W of the tyre, the curvature of the inner arc portion 21 becomes so small that the ground contact pressure in the central portion of the tyre becomes too high. As a result, the vibration forces in the block pattern at the central portion of the tyre is disadvantageously increased and wear is accelerated. If the radius R1 is larger than 2.5 times the width W of the tyre, it is difficult to make the ground contact pressure at the central portion higher than that at the shoulder portions, and since the radius R2 at the shoulder portion becomes too large, the contraction allowance in the radial direction of the shoulder portions becomes small like a tyre with a tread surface having a single curvature as shown in Fig.4, and a similar problem to that of the conventional tyre is brought about.

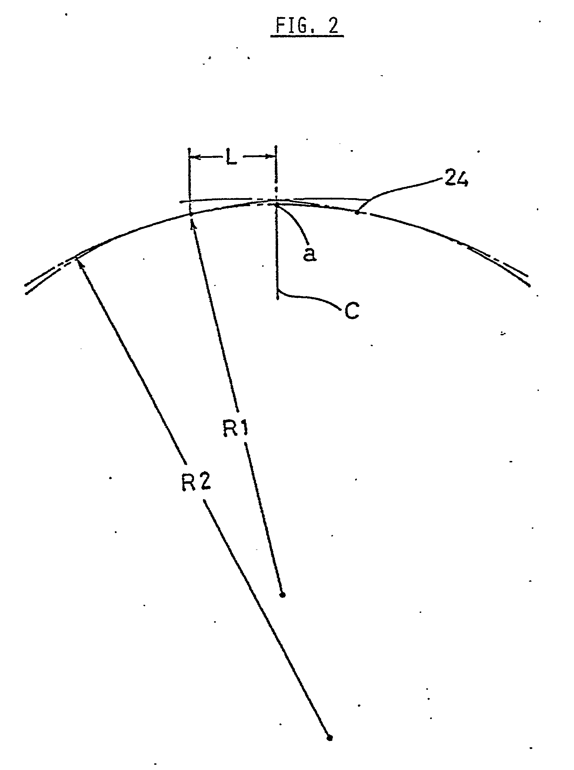

In the passenger car radial tyre 1 shown the inner arc portion 21 and the outer arc portion are connected to each other smoothly, as shown in Fig.2, and the junction 24 is spaced by a distance L from the equator C of the tyre which distance L is 0.08 to 0.2 times the width W of the tyre.

If the distance L from the junction 24 to the equator surface C of the tyre is smaller than 0.08 times the width W of the tyre, the tyre comes too close to a conventional tyre consisting of a single curvature, whereas if the distance L is larger than 0.2 times the width W, the ground contact pressure at the central portion tends to be too large, which causes local wear in the central portion.

3

In a tyre having an aspect ratio of 70% or less, there is a tendency for the increase in the outer diameter to become larger at the shoulder portions when the tyre is inflated so that the ground contact pressure at the shoulder portions tends to rise. Accordingly, the present invention manifests an excellent effect when it is applied to low aspect tyres.

However, the advantages of the present invention also apply to radial tyres of other aspect ratios.

In order to show the advantages of the present invention a tyre was made having a structure shown in Fig.1. and 205/60R 15 in size with the specification shown in Table.1. The tyre produced was mounted on an automobile having a engine with a displacement of 2,000 cc.

The automobile was driven at 60 km/h on a rough asphalt road to measure the noise in the interior. The noise in the interior was measured at the front seat on the right-hand side, in other words, at a position corresponding to the right ear of the driver at the driver's seat.

The tyre used in example had a radius R1 of 300mm and a radius R2 of 520mm, as shown in Table 1. For comparison a tyre of the same size and same structure was produced as a comparative example so as to have the configuration shown in Fig.5. The radius RA1 was 800mm and the radius RA2 was 260mm. The same test was carried out on this tyre.

## TABLE 1

| | | | Example | Comparative Example |
|---|---|---|---|---|
| Structure | | Carcass | 2 plies (nylon) | 2 plies (nylon) |
| | | Belt Layer | 2 plies (steel) | 2 plies (steel) |
| | | Reinforcing layer | 2 plies (nylon) | 2 plies (nylon ) |
| Radius of curvature of tread surface (mm) | | Central portion | R1 = 300 | RA1 = 800 |
| | | Shoulder portion | R2 = 520 | RA2 = 260 |
| | | Depth of wear | No difference | |
| | | Running stability | No difference | |

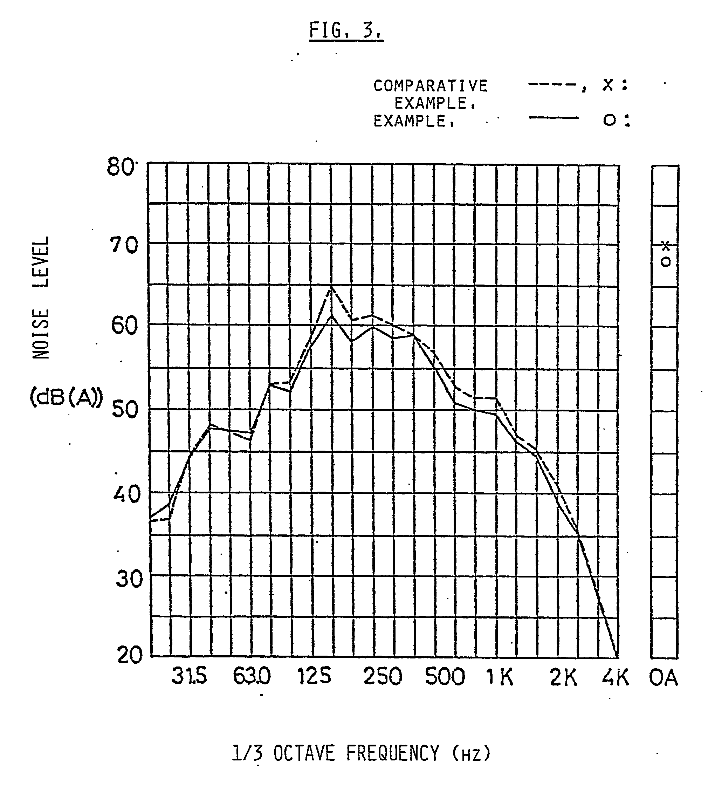

The results are shown in Fig.3, where the tyre of the invention is shown by a line and the comparative example by a broken line. From Fig.3, it is clear that noise is reduced from the tyre of the invention in comparison with that in of the comparative example.

When both tyres were subjected to a running test on a similar rough asphalt road, the road noise measured was lower in the case of using the tyre of the invention than in the case of using the tyre of the comparative example by 3 dB at the peak value and 2 dB at the overall value. There was no describable difference in depth of wear and running stability.

Thus in summary and as described above a passenger car radial tyre having a tread cross sectional radius in the shoulder portions larger than the radius at the central portion makes it possible to provide ground contact pressure in the central portion higher than in the shoulder portions. This reduces the vibrating force applied to the tyre pattern at the shoulder portions, and reduces the vertical rigidity in the shoulder portions. Thus, the present invention provides a well balanced tyre which reduces the transfer of vibration to the rim, reduces the noise derived from a road and passing to the vehicle interior while maintaining wear characteristics and running stability, and enhancing the comfort of the vehicle.

While there has been described what is considered to be a preferred embodiment of the invention, it will be understood that various modifications may be made thereto, and it is intended that the appended claims cover all such modifications.

## Claims

1. A passenger car radial tyre having a tread surface (12) comprising in cross section an inner arc portion (21) which constitutes the central portion of said tread surface (12) and which has a radius of curvature R1 and outer arc portions (22) which are smoothly connected to said inner arc portion (21) in such a manner as to constitute the shoulder portions of said tread surface (12) and which have a radius of curvature R2, the radius of curvature R2 being larger than the radius of curvature R1, characterised in that

(a) the radius of curvature R1 is 1.4 to 2.5 times the sectional width W of said tyre when said tyre is mounted on a rim and inflated,

(b) the radius of curvature R2 is 1.5 to 2.5 times the radius of curvature R1, and

(c) the said inner arc portion (21) and said outer arc portions (22) are connected to each other at junctions (24) which are spaced from the equator surface (c) of the tyre by a distance L which is 0.08 to 0.2 times the sectional width W of the tyre.

2. A tyre according to claim 2 characterised in that the radius of curvature R2 is 1.5 to 2 times the radius of curvature R1.

3. A tyre according to claims 1 or 2, characterised in that the aspect ratio of the tyre, namely, the ratio T/W between sectional height T and the sectional width W of the tyre is not more than 70% considered with the tyre fitted to a rim and inflated.

## Patentansprüche

1. Personenwagen-Radialreifen mit einer Laufstreifenfläche (12), die im Querschnitt einen inneren Bogenabschnitt (21) umfaßt, welcher den Zentralabschnitt der Laufstreifenfläche (12) bildet und einen Krümmungsradius R1 besitzt, und äußere Bogenabschnitte (22), die glatt an den inneren Bogenabschnitt (21) so angeschlossen sind, daß sie die Schulterabschnitte der Laufstreifenfläche (12) bilden und einen Krümmungsradius R2 besitzen, der größer als der Krümmungsradius R1 ist, dadurch gekennzeichnet, daß

(a) der Krümmungsradius R1 das 1,4- bis 2,5-fache der Querschnittsbreite W des Reifens ist, wenn der Reifen auf eine Felge aufgezogen und aufgepumpt ist,

(b) der Krümmungsradius R2 das 1,5- bis 2,5-fache des Krümmungsradius R1 ist, und

(c) der innere Bogenabschniit (21) und die äußeren Bogenabschnitte (22) an Verbindungsstellen (24) miteinander verbunden sind, die von der Äquatorfläche (c) des Reifens durch einen Abstand L getrennt sind, der das 0,08- bis 0,2-fache der Querschnittsbreite W des Reifens beträgt.

2. Reifen nach Anspruch 1, dadurch gekennzeichnet, daß der Krümmungsradius R2 das 1,5- bis 2-fache des Krümmungsradius R1 ist.

3. Reifen nach Anspruch 1 oder 2, dadurch gekennzeichnet, daß das Querschnittsverhältnis des Reifens, d.h. das Verhältnis T/W der Querschnittshöhe T zur Querschnittsbreite W des Reifens beim auf eine Felge aufgezogenen und aufgepumpten Reifen nicht mehr als 70% beträgt.

## Revendications

1. Pneumatique à caracasse radiale pour véhicule de transport de passagers ayant une surface de bande de roulement (12) qui comporte, en coupe, une partie interne (21) en arc de cercle qui constitue la partie centrale de la surface (12) de la bande de roulement et qui a un rayon de courbure R1 et des parties externes (22) en arc de cercle qui sont raccordées progressivement à la partie interne (21) en arc de cercle de manière que des parties d'épaulement de la surface de la bande de roulement (12) soient formées et possèdent un rayon de courbure R2, le rayon de courbure R2 étant supérieur au rayon de courbure R1, caractérisé en ce que:

a) le rayon de courbure R1 est compris entre 1,4 et 2,5 fois la largeur en coupe W du pneumatique lorsque le pneumatique est monté sur un jante et est gonflé,

b) le rayon de courbure R2 est compris entre 1,5 et 2,5 fois le rayon de courbure R1, et

c) la partie interne (21) en arc de cercle et les parties externes (22) en arc de cercle sont raccordées à

des jonctions (24) qui sont séparées du plan équatorial (C) du pneumatique par une distance L qui est comprise entre 0,08 et 0,2 fois la largeur W du pneumatique, en coupe.

2. Pneumatique selon la revendication 1, caractérisé en ce que le rayon de courbure R2 est compris entre 1,5 et 2 fois le rayon de courbure R1.

3. Pneumatique selon la revendication 1 ou 2, caractérisé en ce que le coefficient d'allongement du pneumatique, c'est-à-dire le rapport R/W de la hauteur T en coupe et de la largeur W en coupe du pneumatique, ne dépasse pas 70%, lorsqu'il est déterminé sur un pneumatique monté sur une jante et gonflé.

## FIG. 1.

FIG. 2

# FIG. 3.

COMPARATIVE ----, X:
EXAMPLE.
EXAMPLE. ——— O:

NOISE LEVEL (dB(A))

1/3 OCTAVE FREQUENCY (Hz)

FIG. 4

FIG. 5